# EUROPÄISCHE PATENTSCHRIFT

(11) **EP 1 110 659 B1**
(45) Veröffentlichungstag und Bekanntmachung des Hinweises auf die Patenterteilung: **01.10.2003**
(21) Anmeldenummer: 00118708.7
(22) Anmeldetag: 30.08.2000
(51) Int. Cl.: B23K 26/00, B23K 33/00

(54) **Verfahren und Vorrichtung zur Herstellung eines Gehäuses in Halbschalen-Bauweise für einen Kraftfahrzeug-Schalldämpfer oder dergleichen**
Half-shell vessel manufacturing method and apparatus, used in a vehicle muffler
Méthode et dispositif pour fabriquer un boitier en demi-coquilles pour un atténuateur sonore de véhicule

(30) Priorität: 22.12.1999 DE 19962042
(43) Veröffentlichungstag der Anmeldung: 27.06.2001
(73) Patentinhaber: J. Eberspächer GmbH & Co., 73730 Esslingen (DE)
(72) Erfinder: Linsler, Rainer, 66740 Saarlouis (DE); Schug, Norbert, 66909 Herschweiler-Pettersheim (DE); Andre, Joachim, 66346 Püttlingen (DE); Collet, Jörg-Eike, 66540 Münchwies (DE)

(56) Entgegenhaltungen:
- EP-A- 0 278 455
- EP-A- 0 552 468
- EP-A- 0 622 150
- US-A- 5 180 408
- US-A- 5 221 585
- PATENT ABSTRACTS OF JAPAN vol. 015, no. 025 (M-1071), 21. Januar 1991 (1991-01-21) & JP 02 267465 A (FUJIKEN ENG KK), 1. November 1990 (1990-11-01)

## Beschreibung

Die Erfindung betrifft ein Verfahren und eine Vorrichtung zur Herstellung eines Gehäuses in Halbschalen-Bauweise für einen Kraftfahrzeug-Schalldämpfer, Katalysator oder dergleichen, bei welchem die vorgefertigten Halbschalen mit ihren flachen Schalenrändern aufeinander gesetzt und die zusammengesetzten Halbschalen im Bereich ihrer flachen Schalenränder verschweißt werden, sowie ein hiernach gefertigtes Gehäuse.

Bekanntermaßen besitzen beispielsweise Absorptions-Schalldämpfer-Gehäuse in Halbschalen-Bauweise vorgefertigte Halbschalen, die im Bereich ihrer Trennebene mittels umgeschlagener Falz oder mittels flacher Schalenränder und Verschweißung endmontiert werden, wie z.B. in Dokument EP-A-622 150 offenbart. Insbesondere bei flachen Schalenrändern ergibt sich das Problem der exakten Positionierung der beiden aufeinander gesetzten Schalenhälften zueinander vor einem Verschweißen. Die Teile werden durch aufwendige Ausrichtverfahren ausgerichtet, festgeklemmt und dann positioniert miteinander verschweißt, oder ohne aufwendige Ausrichtverfahren mit Gefahr einer Fehlausrichtung bzw. Ausschußgefahr verschweißt.

Aufgabe der Erfindung ist, ein Verfahren und eine Vorrichtung zur Herstellung eines Gehäuses in Halbschalen-Bauweise für einen Kraftfahrzeug-Schalldämpfer oder dergleichen mit Hilfe einfacher Mittel zur Verfügung zu stellen und entsprechend eine Schalldämpfer-Gehäuse oder dergleichen auf einfache Weise zu schaffen, insbesondere im Hinblick auf eine einwandfreie Positionierung der beiden Halbschalen vor einem Verschweißen.

Gelöst wird die Aufgabe durch ein Herstellungsverfahren der im Anspruch 1 angegebenen Art.

Vorteilhaft weitergebildet wird dieses Verfahren durch die Merkmale der Ansprüche 2 bis 4.

Ein nach dem erfindungsgemäßen Verfahren gefertigtes Gehäuse kennzeichnet sich durch die Merkmale des Anspruchs 5.

Das Gehäuse ist vorteilhaft weitergebildet durch die Merkmale der Ansprüche 5 bis 8.

Eine Klemmvorrichtung zur Durchführung des erfindungsgemäßen Verfahrens kennzeichnet sich durch die Merkmale des Anspruchs 9, vorteilhaft weitergebildet durch die Merkmale der Ansprüche 10 und 11.

Wesen des erfindungsgemäßen Verfahrens zur Herstellung eines Gehäuses in Halbschalen-Bauweise ist, daß die Halbschalen im Schalenrand mit Positionieraussparungen versehen und die Halbschalen mit zueinander ausgerichteten, deckungsgleichen Positionieraussparungen aufeinander gesetzt und zugehörige Paare von deckungsgleichen Positionieraussparungen mittels formschlüssig eingreifender Positionierstifte vor einem verschweißen der Schalenränder positioniert werden.

Vorzugsweise werden die zusammengesetzten positionierten Halbschalen vor einem Verschweißen in einer Klemmvorrichtung mittels oberer Klemmbacke und unterer Klemmbacke festgeklemmt.

Der in zugehörige Positionieraussparungen formschlüssig eingreifende Positionierstift wird zweckmäßigerweise in der unteren Klemmbacke formschlüssig gehaltert.

Das Verschweißen der Schalenränder erfolgt vornehmlich mittels Laser.

Bei einem nach vergenanntem Verfahren gefertigten Gehäuse für einen Schalldämpfer oder dergleichen besitzen die flachen Schalenränder der Halbschalen zumindest ein Paar von Positionieraussparungen für einen formschlüssigen Eingriff eines zugehörigen Positionierstifts, der nach einem Verschweißen der Schalenränder wieder entfernbar ist.

Die flach aufeinander liegenden mittels Positionierstift positionierten Schalenränder zusammengesetzter Halbschalen sind mittels Lasernaht laser-verschweißt.

Randoffene Positionieraussparungen können Halbrundform und/oder Spitzkerben-Form besitzen.

Zur Fertigung eines Gehäuses wird insbesondere eine Klemmvorrichtung verwendet, welche eine obere Klemmbacke und eine unter Klemmbacke aufweist, wobei letztere zumindest eine oberseitige Steckaufnahme für eine formschlüssige Aufnahme eines Positionierstifts besitzt.

Die untere Klemmbacke untergreift formschlüssig zumindest einen Teil der unteren Halbschale im Bereich des unteren Schalenrandes der unteren Halbschale.

Die obere Klemmbacke übergreift formschlüssig zumindest einen Teil der oberen Halbschale, wobei der obere Schalenrand der oberen Halbschale für ein Verschweißen frei zugänglich ist.

Durch die Erfindung wird also mit Hilfe einfacher Mittel insbesondere ein exaktes passgenaues Positionieren von Oberund Unterschale für Schalldämpfer, Katalysatoren, etc. vor einem Schweißen geschaffen. Oberer und unterer Schalenrand sind hierbei insbesondere mit Aussparungen bzw. Ausklinkungen ausgestaltet, die nach Bedarf mehrfach am Umfang zur Fixierung von Ober- und Unterschale in einer Spann- oder Klemmvorrichtung mittels Positionierstift oder Klötzchen vorgesehen sein können. Insbesondere beim Laser-Schweißen besteht das Problem, die Schnittkanten der Halbschalen genau zu positionieren. Durch beim Ziehen der Schalen entstandene Spannungen "springen" beide Schalen unterschiedlich auf, passen nicht mehr übereinander und müssen vor dem Schweißen in die korrekte Form gedrückt werden. Außerdem ist eine Längs- und Querpositionierung möglich.

Die Erfindung wird nachfolgend anhand eines Ausführungsbeispiels unter Bezugnahme auf die beigefügte Zeichnung näher beschrieben; es zeigen:
- Fig. 1: ein Schalldämpfer-Gehäuse in Halbschalen-Bauweise in einer Klemmvorrichtung schematisch in einem vertikalen Teilschnitt, und
- Fig. 2: das Schalldämpfer-Gehäuse nach Figur 1 ohne Klemmvorrichtung in einer schematischen Draufsicht.

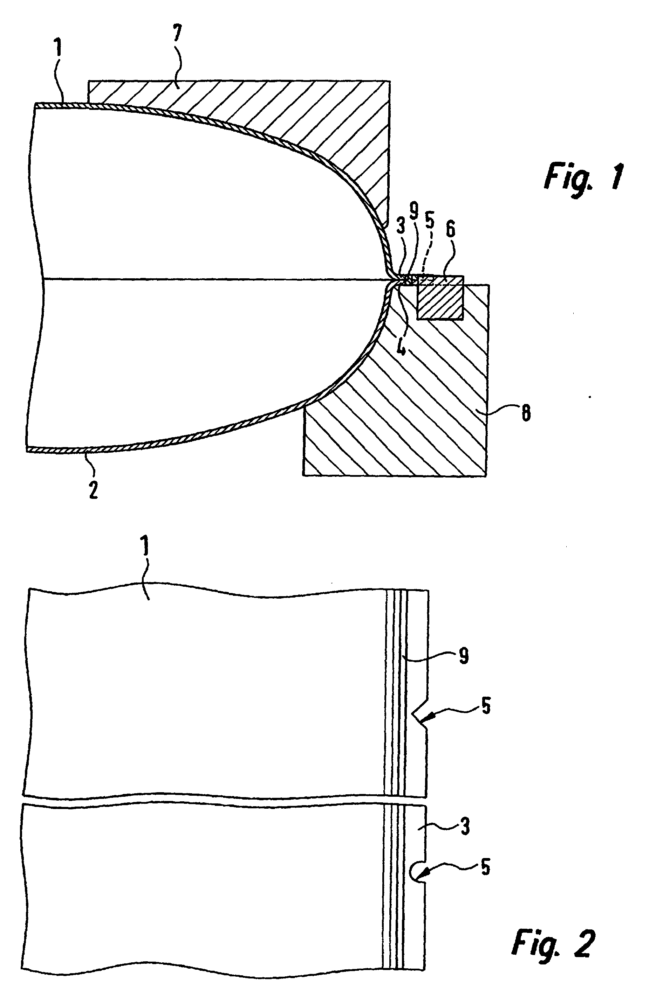

Gemäß den Figuren 1 und 2 umfaßt ein Schalldämpfer ein Gehäuse in Halbschalen-Bauweise.

Insbesondere besitzt der Schalldämpfer eine obere Halbschale 1 und eine untere Halbschale 2. Im Innern befinden sich weitere hier nicht weiter interessierende Schalldämpferteile.

Sowohl die obere Halbschale 1 als auch die untere Halbschale 2 besitzen flache Schalenränder 3 bzw. 4, die im zusammengesetzten Zustand der beiden Halbschalen aufeinander liegen und verschweißt sind, insbesondere mittels Lasernaht 9.

In jeden Schalenrand 3 bzw. 4 sind zumindest Ausklinkungen in Form von deckungsgleichen Positionieraussparungen 5 eingestanzt, die durchgehende Bohrungen sein oder randoffene beispielsweise halbrunde Form oder Spitzkerben-Form besitzen können, wie dies in der Figur 2 dargestellt ist. Eine halbrunde Form einer Positionieraussparung ist besonders spannungsarm.

Jedem Paar von deckungsgleichen Positionieraussparungen 5 einer oberen und einer unteren Halbschale 1, 2 ist ein passungsgenauer Positionierstift 6 oder dergleichen zugeordnet, der in einer unteren Klemmbacke 8 einer Klemmvorrichtung mit zumindest einer oberen Klemmbacke 7 und zumindest einer unteren Klemmbacke 8 formschlüssig in einer Sackbohrung schalenrandseitig aufgenommen ist.

Das Verfahren zur Herstellung des vorgenannten Gehäuses für einen Kraftfahrzeug-Schalldämpfer, Katalysator oder dergleichen in Halbschalen-Bauweise sieht nun vor, die Halbschalen 1, 2 mit integrierten flachen Schalenränder 3 bzw. 4 vorzufertigen. insbesondere zu ziehen. In den flachen Schalenrändern 3, 4 werden die Positionieraussparungen 5 eingestanzt oder anderweitig eingebracht. Dann werden die vorgefertigten Halbschalen 1, 2 in eine Klemm- oder Spanneinrichtung eingebracht und mit ihren flachen Schalenrändern 3, 4 aufeinander gesetzt.

Die Halbschalen 1, 2 werden insbesondere mit zueinander ausgerichteten Positionieraussparungen 5 deckungsgleich aufeinander gesetzt und zugehörige Paare von deckungsgleichen Positionieraussparungen mittels formschlüssig eingreifender Positionierstifte 6 positioniert und anschließend in der Klemmvorrichtung mittels oberer Klemmbacke 7 und unterer Klemmbakke 8 festgeklemmt. Die in zugehörigen Positionieraussparungen 5 formschlüssig eingreifenden Positionierstifte 6 werden in der unteren Klemmbacke 8 der Klemmvorrichtung formschlüssig in einer Sackbohrung im Bereich des Schalenrandes 3, 4 gehaltert.

Das anschließende Verschweißen der Schalenränder 3, 4 mit Setzen einer Lasernaht 9 erfolgt durch Laser.

Ist die Lasernaht 9 rundum gesetzt, werden die Positionierstifte 6 nach oben aus den Sackbohrungen der unteren Klemmbacke 8 herausgezogen, und es werden die Klemmbacken 7 und 8 wieder gelöst. Anschließend wird das positionsgenau lasergeschweißte Gehäuse aus der Klemmvorrichtung entfernt.

Die Klemmvorrichtung zur Fertigung eines Gehäuses weist zumindest eine obere Klemmbacke 7 und zumindest eine untere Klemmbacke 8 auf, welche zumindest eine oberseitige Steckaufnahme für eine formschlüssige Aufnahme eines Positionierstifts 6 besitzt. Die untere Klemmbacke 8 untergreift formschlüssig zumindest einen Teil der unteren Halbschale 2 im Bereich des unteren Schalenrandes 4 der unteren Halbschale 2, während die obere Klemmbacke 7 formschlüssig zumindest einen Teil der oberen Halbschale 1 übergreift, wobei der obere Schalenrand 3 der oberen Halbschale 1 für ein Verschweißen frei zugänglich ist.

## Patentansprüche

1. Verfahren zur Herstellung eines Gehäuses in Halbschalen-Bauweise für einen Kraftfahrzeug-Schalldämpfer, Katalysator oder dergleichen, bei welchem die vorgefertigten Halbschalen (1, 2) mit ihren flachen Schalenrändern (3, 4) aufeinander gesetzt und die zusammengesetzten Halbschalen (1, 2) im Bereich ihrer flachen Schalenränder (3 bzw. 4) verschweißt werden,
**dadurch gekennzeichnet,**
**daß** die Halbschalen (1, 2) im Schalenrand (3, 4) mit Positionieraussparungen (5) versehen und die Halbschalen mit zueinander ausgerichteten, deckungsgleichen Positionieraussparungen (5) aufeinander gesetzt und zugehörige Paare von deckungsgleichen Positionieraussparungen mittels formschlüssig eingreifender Positionierstifte (6) vor einem Verschweißen der Schalenränder (3, 4) positioniert werden.

2. Verfahren nach Anspruch 1,
**dadurch gekennzeichnet,**
**daß** die zusammengesetzten positionierten Halbschalen (1, 2) vor einem Verschweißen in einer Klemmvorrichtung mittels oberer Klemmbacke (7) und unterer Klemmbacke (8) festgeklemmt werden.

3. Verfahren nach Anspruch 2,
**dadurch gekennzeichnet,**
**daß** der in zugehörige Positionieraussparungen (5) formschlüssig eingreifende Positionierstift (6) in der unteren Klemmbacke (8) formschlüssig gehaltert wird.

4. Verfahren nach einem der Ansprüche 1 bis 3,
**dadurch gekennzeichnet,**
**daß** das Verschweißen der Schalenränder (3, 4) durch Laser erfolgt.

5. Gehäuse in Halbschalen-Bauweise für einen Schalldämpfer oder dergleichen, gefertigt nach einem der Verfahren gemäß Anspruch 1 bis 4,
**dadurch gekennzeichnet,**
**daß** die flachen Schalenränder (3, 4) der Halbschalen (1, 2) zumindest ein Paar von Positionieraussparungen (5) für einen formschlüssigen Eingriff eines zugehörigen Positionierstifts (6) aufweist, der nach einem Verschweißen der Schalenränder (3, 4) entfernbar ist.

6. Gehäuse nach Anspruch 5,
**dadurch gekennzeichnet,**
**daß** die flach aufeinander liegenden mittels Positionierstift (6) positionierten Schalenränder (3, 4) zusammengesetzter Halbschalen (1, 2) mittels Lasernaht (9) laser-verschweißt sind.

7. Gehäuse nach Anspruch 5 oder 6,
**dadurch gekennzeichnet,**
**daß** zumindest ein Paar von randoffenen Positionieraussparungen (5) Halbrundform besitzt.

8. Gehäuse nach einem der Ansprüche 5 bis 7,
**dadurch gekennzeichnet,**
**daß** zumindest ein Paar von randoffenen Positionieraussparungen (5) Spitzkerben-Form besitzt.

9. Klemmvorrichtung zur Fertigung eines Gehäuses gemäß den Ansprüchen 5 bis 8, gefertigt nach den Ansprüchen 1 bis 4, **gekennzeichnet durch** eine obere Klemmbacke (7) und eine unter Klemmbacke (8), welche zumindest eine oberseitige Steckaufnahme für eine formschlüssige Aufnahme eines Positionierstifts (6) aufweist.

10. Klemmvorrichtung nach Anspruch 9,
**dadurch gekennzeichnet,**
**daß** die untere Klemmbacke (8) formschlüssig zumindest einen Teil der unteren Halbschale (2) im Bereich des unteren Schalenrandes (4) der unteren Halbschale (2) untergreift.

11. Klemmvorrichtung nach Anspruch 9 oder 10,
**dadurch gekennzeichnet,**
**daß** die obere Klemmbacke (7) formschlüssig zumindest einen Teil der oberen Halbschale (1) übergreift, wobei der obere Schalenrand (3) der oberen Halbschale (1) für ein Verschweißen frei zugänglich ist.

## Claims

1. Method for producing a housing in the semi-monocoque form of construction for a motor vehicle silencer, catalytic converter or the like, in which the prefabricated half-shells (1, 2) are placed with their flat shell edges (3, 4) one on the other, and the assembled half-shells (1, 2) are welded together in the region of their flat shell edges (3 or 4), **characterized in that** the half-shells (1, 2) are provided in the shell edge (3, 4) with positioning cutouts (5) and the half-shells are placed with mutually aligned congruent positioning cutouts (5) one on the other, and associated pairs of congruent positioning cutouts are positioned by means of positively engaging positioning studs (6) before the shell edges (3, 4) are welded together.

2. Method according to Claim 1, **characterized in that**, before being welded together, the assembled positioned half-shells (1, 2) are clamped in a clamping device by means of an upper clamping jaw (7) and of a lower clamping jaw (8).

3. Method according to Claim 2, **characterized in that** the positioning stud (6) engaging positively into associated positioning cutouts (5) is held positively in the lower clamping jaw (8).

4. Method according to one of Claims 1 to 3, **characterized in that** the shell edges (3, 4) are welded together by laser.

5. Housing in the semi-monocoque form of construction for a silencer or the like, manufactured by one of the methods according to Claims 1 to 4, **characterized in that** the flat shell edges (3, 4) of the half-shells (1, 2) have at least one pair of positioning cutouts (5) for a positive engagement of an associated positioning stud (6) which is removable after the shell edges (3, 4) have been welded together.

6. Housing according to Claim 5, **characterized in that** the shell edges (3, 4) of assembled half-shells (1, 2), the said shell edges lying flat one on the other and being positioned by means of a positioning stud (6), are laser-welded together by means of a laser seam (9).

7. Housing according to Claim 5 or 6, **characterized in that** at least one pair of open-edged positioning cutouts (5) possesses a semicircular shape.

8. Housing according to one of Claims 5 to 7, **characterized in that** at least one pair of open-edged positioning cutouts (5) possesses a V-notch shape.

9. Clamping device for manufacturing a housing according to Claims 5 to 8, manufactured according to Claims 1 to 4, **characterized by** an upper clamping jaw (7) and a lower clamping jaw (8) which has at least one upper-side plug receptacle for a positive reception of a positioning stud (6).

10. Clamping device according to Claim 9, **characterized in that** the lower clamping jaw (8) engages positively under at least part of the lower half-shell (2) in the region of the lower shell edge (4) of the lower half-shell (2).

11. Clamping device according to Claim 9 or 10, **characterized in that** the upper clamping jaw (7) engages positively over at least part of the upper half-shell (1), the upper shell edge (3) of the upper half-shell (1) being freely accessible for welding together.

## Revendications

1. Procédé de fabrication d'un boîtier de conception semi-monocoque pour un amortisseur de bruit de véhicule automobile, un catalyseur, ou similaire, pour lequel les semi-monocoques préfabriquées (1, 2) avec leurs bords de coques plats (3, 4) sont posées l'une sur l'autre et les semi-monocoques (1, 2) ainsi assemblées sont soudées dans la zone de leurs bords de coques plats (3 ou 4), **caractérisé en ce que** les semi-monocoques (1, 2) sont pourvues d'évidements de positionnement (5) dans le bord de coque (3, 4) et **en ce que** les semi-monocoques sont posées l'une sur l'autre avec des évidements de positionnement (5) orientés les uns vers les autres et coïncidents, et que des paires associées d'évidements de positionnement coïncidents sont positionnées moyennant des pointes de positionnement (6) en prise par conjugaison de forme, avant le soudage des bords des coques (3, 4).

2. Procédé selon la revendication 1, **caractérisé en ce que** les semi-monocoques positionnées et assemblées (1, 2) sont solidement serrées dans un dispositif de serrage moyennant une mâchoire de serrage supérieure (7) et une mâchoire de serrage inférieure (8), avant le soudage.

3. Procédé selon la revendication 2, **caractérisé en ce que** la pointe de positionnement (6) en prise par conjugaison de forme avec des évidements de positionnement (5) associés, est tenue par conjugaison de forme dans la mâchoire de serrage inférieure (8).

4. Procédé selon l'une quelconque des revendications 1 à 3, **caractérisé en ce que** le soudage des bords de coques (3, 4) soit effectué au laser.

5. Boîtier de conception semi-monocoque pour un amortisseur de bruit ou similaire, réalisé selon un des procédés selon les revendications 1 à 4, **caractérisé en ce que** les bords de coques plats (3, 4) des semi-monocoques (1, 2) présentent au moins une paire d'évidements de positionnement (5) pour une saisie par conjugaison de forme d'une pointe de positionnement (6) associée, laquelle peut être enlevée après le soudage des bords des coques (3, 4).

6. Boîtier selon la revendication 5, **caractérisé en ce que** les bords de coques (3, 4) situés à plat l'un sur l'autre et positionnés moyennant une pointe de positionnement (6), de semi-monocoques (1, 2) assemblées, sont soudés moyennant une soudure au laser (9).

7. Boîtier selon la revendication 5 ou 6, **caractérisé en ce qu'**au moins une paire d'évidements de positionnement (5) ouverts sur le bord possède une forme en demi-cercle.

8. Boîtier selon l'une quelconque des revendications 5 à 7, **caractérisé en ce qu'**au moins une paire d'évidements de positionnement (5) ouverts sur le bord possède une forme en entaille triangulaire.

9. Dispositif de serrage pour la fabrication d'un boîtier selon les revendications 5 à 8, réalisé selon les revendications 1 à 4, **caractérisé par** une mâchoire de serrage supérieure (7) et une mâchoire de serrage inférieure (8), qui présente au moins un logement enfichable du côté supérieur pour un logement par conjugaison de forme d'une pointe de positionnement (6).

10. Dispositif de serrage selon la revendication 9, **caractérisé en ce que** la mâchoire de serrage inférieure (8) agrippe par en-dessous par conjugaison de forme au moins une partie de la semi-monocoque inférieure (2) dans la zone du bord de coque inférieur (4) de la semi-monocoque inférieure (2).

11. Dispositif de serrage selon la revendication 9 ou 10, **caractérisé en ce que** la mâchoire de serrage supérieure (7) agrippe par le dessus par conjugaison de forme au moins une partie de la semi-monocoque supérieure (1), moyennant quoi le bord de coque supérieur (3) de la semi-monocoque supérieure (1) est librement accessible pour un soudage.
